# EUROPEAN PATENT APPLICATION

(11) **EP 4 458 166 A1**
(43) Date of publication of application: **06.11.2024**
(21) Application number: 22916586.5
(22) Date of filing: 20.12.2022
(51) Int. Cl.: A23L 23/00, A23L 27/30, A23L 3/16

(54) **NATURAL SAUCE, AND METHOD FOR PREPARING SAME**

(30) Priority: 29.12.2021 KR 20210191606
(71) Applicant: CJ CheilJedang Corporation, Seoul 04560 (KR)
(72) Inventor: KONG, Moon Hee, Seoul 04560 (KR); JUNG, Jiwoo, Seoul 04560 (KR); KIM, Sunny, Seoul 04560 (KR); LEE, Minhyun, Seoul 04560 (KR); KIM, Chul Jin, Seoul 04560 (KR)
(74) Representative: Icosa
(86) International application number: PCT/KR2022/020840
(87) International publication number: WO 2023/128444

(57) **Abstract**

The present disclosure relates to a method for preparing a natural sauce, a natural sauce prepared by the method, a food composition comprising the sauce, and a method for reducing browning of a natural sauce.

## Description

### [Technical Field]

The present disclosure relates to a method for preparing a natural(naturally derived additives-based) sauce, a natural sauce prepared by the method, a food composition comprising the sauce, and a method for reducing browning of a natural sauce.

### [Background Art]

Sauce is derived from the Latin word 'salsus', meaning `salted', and is a general term for seasonings in a liquid or semi-liquid state that are added to or sprinkled on food to add flavor or color to dishes. Currently, most sauce products are distributed refrigerated or at room temperature.

Meanwhile, in the case of sauces with a high content of sugars and dairy ingredients, such as caramel sauce, the sugar content is very high (about 80%) so as to ensure microbial stability, resulting in high calories, which is a problem. Additionally, as caramelization proceeds through a heating process, such as high-temperature pasteurization, high-temperature filling, *etc.,* browning occurs during the cooling process while being distributed, thereby increasing variation in quality for each product and affecting consumer preference such as product appearance, taste, *etc.,* which may be problematic.

In order to solve the above problems, many low-calorie and zero-sugar sweeteners have been utilized to replace sucrose, but these are less stable under heat conditions, or have a sweetness profile and mouthfeel different from sucrose, have different persistence of sweetness, aftertaste, bitterness and astringency than sucrose, and contain a high content of synthetic additives.

In addition, in the case of natural(naturally derived additives-based) sauce prepared using only natural (naturally derived) additives (neutral pH with no coloring or synthetic preservatives, *etc*.) as raw materials, these have poor quality stability, and thus if the sugar content is reduced, there may be a problem of managing the expiration date due to microbial growth, *etc.,* if the sugar content is reduced.

Accordingly, there is a need to develop a sauce which has a low sugar content, does not cause browning, and utilizes only natural ingredients, while maintaining excellent sweetness and microbial stability similar to sauces containing excessive amounts of sugars and dairy ingredients.

### [Prior Art Document]

### [Patent Document]

(Patent Document 1) KR 10-0520438 B1

### [Disclosure]

### [Technical Problem]

The present inventors have prepared a sauce which is low in calories by reducing the sugars compared to existing products, does not cause browning, and utilizes only natural(naturally derived) ingredients, while maintaining excellent sweetness and microbial stability similar to sauces containing excessive amounts of sugars and dairy ingredients, and developed a method for preparing a natural(naturally derived additives-based) sauce with improved quality control and preference, a natural sauce prepared by the method, a food composition comprising the sauce, and a method for reducing browning of the natural sauce, thereby completing the present disclosure.

### [Technical Solution]

It is one object of the present disclosure to provide a method for preparing a natural sauce, comprising sucrose, liquid sugars, sugar alcohols, natural high-intensity sweeteners, and dairy ingredients.

It is another object of the present disclosure to provide a natural sauce prepared by the method.

It is still another object of the present disclosure to provide a food composition comprising the natural sauce.

It is yet another object of the present disclosure to provide a method for reducing browning of a natural sauce.

It is even another object of the present disclosure to provide a natural sauce comprising sucrose, liquid sugars, sugar alcohols, natural high-intensity sweeteners, and dairy ingredients.

### [Advantageous Effects]

The method for preparing a natural (naturally derived additives-based) sauce of the present disclosure replaces sucrose and liquid sugars with sugar alcohols and natural high-intensity sweeteners, and includes a two-step pasteurization process by low-temperature long-time (LTLT) pasteurization and high-temperature short-time (HTST) pasteurization, and thus provides a natural sauce, which is low in calories by reducing the sugars compared to existing products, does not cause browning, and utilizes only natural ingredients, thereby improving quality control and preference, while maintaining excellent sweetness and microbial stability similar to sauces containing excessive amounts of sugars and dairy ingredients.

### [Brief Description of Drawings]

FIG. 1 is a diagram showing the results of microbial safety evaluation of natural syrup prepared by the preparation method of the present disclosure.
FIG. 2 is a diagram showing the results of microbial control (log) evaluation of natural syrup prepared by the preparation method of the present disclosure.
FIG. 3 is a diagram showing the results of color measurement of natural syrup prepared by the preparation method of the present disclosure before and after cooling.
FIG. 4 is a diagram showing the results of color difference measurement of natural syrup prepared by the preparation method of the present disclosure before and after cooling
FIG. 5 is a diagram showing the results of detailed sensory property evaluation of natural syrup prepared by the preparation method of the present disclosure.

### [Detailed Description of Preferred Embodiments]

The present disclosure will be described in detail as follows. Meanwhile, each description and embodiment disclosed herein can be applied to other descriptions and embodiments, respectively. That is, all combinations of various elements disclosed herein fall within the scope of the present disclosure. Further, the scope of the present disclosure is not limited by the specific description described below. A number of papers and patent documents have been cited throughout the present specification. The content of the cited papers and patent documents is incorporated herein by reference in their entirety and the level of technical field to which the present disclosure belongs and the contents of the present disclosure will be described more clearly.

One aspect of the present disclosure provides a method for preparing a natural(naturally derived additives-based) sauce, comprising sucrose, liquid sugars, sugar alcohols, natural high-intensity sweeteners, and dairy ingredients.

Specifically, the present disclosure provides a method for preparing a natural sauce, comprising: mixing sucrose, liquid sugars, sugar alcohols, natural high-intensity sweeteners, and dairy ingredients in water; dissolving and caramelizing the mixture by heating; subjecting the caramelized mixture to primary pasteurization using low-temperature long-time (LTLT) pasteurization at a temperature range of 60°C to 80°C for 30 to 60 minutes; and subjecting the primarily pasteurized mixture to secondary pasteurization using high-temperature short-time (HTST) pasteurization at a temperature range of 90°C to 100°C for 30 seconds to 3 minutes.

In general, in the case of sauce with a high content of sugars and dairy ingredients, such as caramel sauce, the sugar content is very high (about 80%) so as to ensure microbial stability, resulting in high calories, which is a problem. Additionally, as caramelization proceeds through a heating process, such as high-temperature pasteurization, high-temperature filling, *etc.,* browning occurs during the cooling process while being distributed, thereby increasing variation in quality for each product and affecting consumer preference such as product appearance, taste, *etc.,* which may be problematic.

The method for preparing a natural sauce of the present disclosure replaces sucrose and liquid sugars with sugar alcohols and natural high-intensity sweeteners at a certain rate, and comprises a two-step pasteurization process by low-temperature long-time (LTLT) pasteurization and high-temperature short-time (HTST) pasteurization, and thus prepares a natural sauce, which is low in calories by reducing the sugars compared to existing products, does not cause browning, and utilizes only natural ingredients, while maintaining excellent sweetness and microbial stability similar to sauces containing excessive amounts of sugars and dairy ingredients, thereby providing excellent effects of improving quality control and consumer preference.

As used herein, the sauce is a general term for seasonings in a liquid or semi-liquid state that are added to or sprinkled on food to add flavor or color to food, and may be classified in various ways, depending on the purpose for which it is used, the materials it is made from, its color, the use of mother sauces, *etc.* Specifically, the sauce may include all of table sauces such as caramel sauce, Worcestershire sauce, pork cutlet sauce, anchovy sauce, chili sauce, Tabasco sauce, tomato ketchup, mayonnaise, dressings, *etc.,* and cooking sauces (mother sauces) such as velouté sauce, almond sauce, Supreme sauce, Béchamel sauce, tomato sauce, Espagnole sauce, *etc.* Specifically, it may be a sauce containing excessive amounts of sugars and dairy ingredients, and more specifically, it may be a caramel sauce, but is not limited thereto.

In the present disclosure, no occurrence of browning implies that:
i) the color change (△E) relative to the sauce before cooling is 0.1 to 1, or
ii) the lightness (L value) and yellow value (b value) are high and the red value (a value) is low for the color measured at room temperature relative to a sauce which does not contain sugar alcohols and natural high-intensity sweeteners and which is prepared by a method that does not include a two-step pasteurization process of low-temperature long-time (LTLT) pasteurization and high-temperature short-time (HTST) pasteurization, when the color of the product is measured after cooling the sauce to room temperature, which is prepared at high temperatures by the pasteurization step and/or high-temperature filling step during the preparation process.

Specifically, the color change (△E) is calculated as a change in lightness (L value), yellow value (b value), and red value (a value), and generally, the color difference cannot be recognized, when the color change (ΔE) is less than 1.

Specifically, the sucrose and liquid sugars may be contained in an amount of 50 to 60 parts by weight based on 100 parts by weight of the total sauce, but is not limited thereto.

The liquid sugar may be one or more selected from the group consisting of high-fructose corn syrup, starch syrup, and liquid oligosaccharide. Specifically, it may be high-fructose corn syrup and starch syrup, but is not limited thereto.

The sucrose and liquid sugars used herein are not particularly limited, and sucrose and liquid sugars commonly used in the technical field or similar fields may be used. As the sucrose, specifically, refined sucrose may be used.

The sauce of the present disclosure may reduce sugars by about 30% or more compared to existing products by replacing sucrose with sugar alcohols and natural high-intensity sweeteners at a certain rate.

Specifically, the sugar alcohol may be contained in an amount of 20 to 40 parts by weight, specifically 25 to 35 parts by weight, and more specifically 28 to 32 parts by weight based on 100 parts by weight of the total composition, but is not limited thereto.

When the sugar alcohol is contained in the above range, it can effectively replace sucrose while maintaining sweetness compared to existing products, and thus, the sugar may be reduced. If the sugar alcohol is contained in an amount less than 20 parts by weight, it may be difficult to maintain sweetness, and if it is contained in an amount exceeding 40 parts by weight, it may exhibit a sweetness profile and physical properties different from sucrose, decreasing preference, and may cause gastrointestinal disorders. Additionally, there may be a problem that the probability of precipitation into the products may increase as crystallization occurs easily relative to sucrose.

Further, the sugar alcohol may be one or more selected from the group consisting of erythritol, tagatose, xylose, arabinose, ribose, xylitol, lactitol, maltitol, and sorbitol, and may specifically be erythritol or maltitol, but is not limited thereto.

The erythritol is a sugar alcohol known to have a sweetness profile most similar to white sucrose. It has about 70% of the sweetness of sucrose, has a very small calorie of 0 to 0.2 kcal/g, and is excreted outside the body and does not affect insulin, and accordingly, it is sometimes used in a diabetic or low-carbohydrate diet. In the case of other sugar alcohol-based sweeteners, it may cause indigestion and osmotic diarrhea, when consumed more than 10 g per day and thus, the amount consumed must be adjusted. However, erythritol is absorbed in the small intestine immediately after consumption and does not remain in the stomach for long, causing less diarrhea than other sugar alcohol sweeteners. Therefore, it can be effectively used in the preparation of low-calorie products by containing erythritol.

The maltitol is a polyol obtained by hydrogenating maltose, which has lower calories than sucrose and has sensory properties similar to sugar. Maltitol has excellent solubility and does not precipitate into the product, and thus can be effectively used in the preparation of low-calorie products by containing maltitol.

Specifically, the natural high-intensity sweetener may be contained in an amount of 0.01 to 0.1 parts by weight, specifically 0.02 to 0.07 parts by weight, and more specifically 0.02 to 0.06 parts by weight, based on 100 parts by weight of the total composition, but is not limited thereto.

When the natural high-intensity sweetener is contained in the above range, it may have sweetness similar to sucrose when the same amount of sucrose is used, and may mask off-smell and off-flavors of the composition and improve solubility and dispersibility. If the natural high-intensity sweetener is added in a small amount, the sweetness will be lower than that of sucrose, and thus the effect of increasing sweetness by mixing high-intensity sweeteners may not be achieved. In contrast, although these sweeteners are products that improve bitterness and aftertaste, they do not completely provide the same sweetness as sucrose. Thus, if it is contained in an excess amount, it produces a bitter taste inherent to high-intensity sweeteners, which may be inappropriate.

In addition, the natural (naturally derived) high-intensity sweetener may be one or more selected from the group consisting of enzyme-treated stevia, steviol glycosides, monk fruit extracts, licorice extracts, and thaumatin, specifically enzyme-treated stevia and/or steviol glycosides, and more specifically enzyme-treated stevia, but is not limited thereto.

The enzyme-treated stevia (glucosyl-stevia) is a product obtained by adding glucose to steviol glycosides (stevioside) using a glycosyltransferase, and is a taste-improving product from which bitterness and aftertaste inherent to steviol glycosides are removed.

The steviol glycosides are one of the high-intensity sweeteners classified as natural additives. They are natural sweeteners manufactured by extracting and purifying the leaves of stevia (which belongs to the family Asteraceae, *Stevia rebaudiana* Bertoni). They are heat- and pH-stable sweeteners and are about 200 times sweeter than sucrose. However, although steviol glycosides have superior sweetness relative to sucrose, they have the disadvantage of having a long-lasting aftertaste and a bitter and unpleasant taste in addition to the sweet taste.

More specifically, the steviol glycoside may be steviol glycosides (stevioside), rebaudioside A, rebaudioside B, rebaudioside C, rebaudioside D, rebaudioside E, rubusoside, dulcoside A, stevioside, or a mixture thereof, but is not limited thereto, and any high-intensity sweetener that can be used by those skilled in the art to add sweetness may be used. More specifically, it may be rebaudioside A.

As used herein, the term "rebaudioside A" may be used interchangeably with "REBATEN^{™}", and the rebaudioside A exhibits sweetness and persistence of sweetness most similar to sucrose, and when mixed with a sugar alcohol, it does not leave a bitter aftertaste in the end and improves persistence of sweetness.

It is known that the natural high-intensity sweeteners have their own bitter taste. Accordingly, the bitter taste of the natural high-intensity sweeteners may be reduced and the preference may be increased by mixing with the sugar alcohol, specifically erythritol or maltitol. Therefore, it is possible to provide a sauce which maintains excellent sweetness similar to sauces containing excessive amounts of sugars and dairy ingredients, increases persistence of sweetness, improves persistence of overall flavor, and does not cause browning, while significantly reducing calories.

Specifically, the dairy ingredient may be contained in an amount of 5 to 20 parts by weight, specifically 8 to 15 parts by weight, and more specifically 9 to 10 parts by weight based on 100 parts by weight of the total composition, but is not limited thereto.

Specifically, the dairy ingredient may be one or more selected from the group consisting of fresh cream, skim milk powder, whole milk powder, skim condensed milk, whole condensed milk, and sweetened condensed milk. More specifically, it may be fresh cream and skim milk powder, but is not limited thereto.

As the fresh cream, single cream with 30 to 40% milk fat, extra-light cream with 3 to 10% milk fat, light cream with 10 to 20% milk fat, table cream with 20 to 30% milk fat, table cream, sour cream, and whipping cream, which are a processed milk cream with a milk fat content of 18% or more, processed by adding food or food additives to the milk cream, double cream with 48 to 60% milk fat, or powdered milk cream (with a milk fat content of 50% or more) prepared by adding food or food additives to milk cream may generally be used in replacement of fresh cream, but the fresh cream is not limited thereto.

The dairy ingredients used herein are not particularly limited, and dairy ingredients commonly used in the technical field or similar fields may be used.

The sauce of the present disclosure may be used, for example, in the form of a concentrated beverage base which is consumed by diluting in coffee or milk. Accordingly, it may contain excessive amounts of sugars and dairy ingredients.

Additionally, the natural sauce of the present disclosure may further comprise natural stabilizers, natural flavors, *etc.* Further, the natural sauce of the present disclosure may further comprise known materials commonly used in sauces.

Hereinafter, the method for preparing the natural sauce of the present disclosure will be described in detail.

First, sucrose, liquid sugars, sugar alcohols, natural high-intensity sweeteners, and dairy ingredients are mixed in water.

Subsequently, the mixture is dissolved and caramelized by heating.

Specifically, the water may be purified water, but is not limited thereto, and the dissolving step may be performed in a temperature range where a caramelization reaction can occur, but is not limited thereto.

Thereafter, the caramelized mixture is subjected to primary pasteurization using low-temperature long-time (LTLT) pasteurization at a temperature range of 60°C to 80°C for 30 to 60 minutes.

If the primary pasteurization step is performed at a temperature below 60°C, pasteurization may not occur properly because heat-resistant microorganisms such as fungi cannot be controlled, and if it is performed at a temperature exceeding 80°C, it takes a long time to heat up, reducing the efficiency of the manufacturing process. When dairy ingredients and sugars with low heat resistance are exposed to temperatures exceeding 80°C for a long period of time, such as 30 to 60 minutes, browning may occur.

Subsequently, the primarily pasteurized mixture is subjected to secondary pasteurization using high-temperature short-time (HTST) pasteurization at a temperature range of 90°C to 100°C for 30 seconds to 3 minutes.

In one embodiment of the present disclosure, it was confirmed that when low-temperature long-time (LTLT) pasteurization and high-temperature short-time (HTST) pasteurization are performed sequentially, excellent sweetness and microbial stability similar to sauces containing excessive sugars and dairy ingredients can be maintained.

Next, optionally, the step of preparing a sauce by homogenizing the pasteurized sauce may be further included, but is not limited thereto.

Subsequently, optionally, the step of cooling the pasteurized sauce to room temperature may be further included, but is not limited thereto. For example, the cooling step may be a step involved in the distribution process, but is not limited thereto.

In general, sauces, specifically sauces containing excessive amounts of sugars and dairy ingredients, are filled at high temperatures and then distributed refrigerated or at room temperature. Accordingly, browning may occur while being refrigerated or cooled to room temperature during the distribution process, even after packaging. Therefore, there is a problem of increasing variation in quality, such as variation in color, taste, quality, *etc.* for each product, resulting in a decrease in quality control and consumer preference.

In addition, in the case of sauces composed of natural additives, preservatives are added to ensure quality stability and microbial stability, but potassium sorbate and synthetic preservatives are mainly used, which are not suitable for the needs of consumers who prefer natural additives/raw materials.

The method for preparing a natural sauce of the present disclosure replaces sucrose and liquid sugars with sugar alcohols and natural high-intensity sweeteners at a certain rate, and comprises a two-step pasteurization process by low-temperature long-time (LTLT) pasteurization and high-temperature short-time (HTST) pasteurization, and thus prepares a natural sauce, which is low in calories by reducing the sugars compared to existing products, does not cause browning, and utilizes only natural ingredients, while maintaining excellent sweetness and microbial stability similar to sauces containing excessive amounts of sugars and dairy ingredients, thereby providing excellent effects of improving quality control and consumer preference.

Another aspect of the present disclosure provides a natural sauce prepared by the method described above.

The method and the natural sauce are as described above.

Specifically, the sauce may have reduced browning compared to a sauce prepared by a method that does not comprise the primary and secondary pasteurization steps, but is not limited thereto.

As used herein, the term "reduction" is a concept that includes both reduced or no browning compared to a sauce prepared by a method that does not comprise primary and secondary pasteurization steps. The reduction may be used interchangeably with terms such as weakness, reduce, and attenuation, *etc.*

Specifically, the sauce may have a color change (△E) of 0. 1 to 1 after cooling to room temperature, relative to the sauce before cooling, but is not limited thereto.

Still another aspect of the present disclosure provides a food composition comprising the natural sauce.

The natural sauce is as described above.

Specifically, the food composition may further comprise water, coffee, or milk in addition to the natural sauce.

When the sauce of the present disclosure is used in a food composition, the sauce may be added as it is or may be used together with other food compositions or ingredients, and may be used appropriately according to a conventional method. The amount of the active ingredient to be mixed may be suitably determined in consideration of the taste and flavor of the food, the purpose of use, health, *etc.* Examples of the food composition may include, but are not limited to, various sauces, ketchup, dressings, beverages, tea, drinks, alcoholic beverages, vitamin complexes, soups, dairy products, candies, chocolates, *etc.,* and any composition that can produce food, comprising sauce, may be used without limitation.

Yet another aspect of the present disclosure provides a method for reducing browning of a natural sauce.

The natural sauce and browning are as described above.

Specifically, there is provided a method for reducing browning of a natural sauce, comprising: mixing sucrose, liquid sugars, sugar alcohols, natural high-intensity sweeteners, and dairy ingredients in water; dissolving and caramelizing the mixture by heating; subjecting the caramelized mixture to primary pasteurization using low-temperature long-time (LTLT) pasteurization at a temperature range of 60°C to 80°C for 30 to 60 minutes; and subjecting the primarily pasteurized mixture to secondary pasteurization using high-temperature short-time (HTST) pasteurization at a temperature range of 90°C to 100°C for 30 seconds to 3 minutes.

Specifically, the sucrose and liquid sugars may be contained in an amount of 50 to 60 parts by weight based on 100 parts by weight of the total sauce; the sugar alcohols may be contained in an amount of 20 to 40 parts by weight based on 100 parts by weight of the total sauce; the natural high-intensity sweeteners may be contained in an amount of 0.01 to 0.1 parts by weight based on 100 parts by weight of the total sauce; and the dairy ingredients may be contained in an amount of 5 to 20 parts by weight based on 100 parts by weight of the total sauce, but the contents are not limited thereto.

A sauce with increased brightness may be prepared using the method of reducing browning of a natural sauce described above, and thus, the sauce of the present disclosure may be used as a brightness enhancer of the sauce.

Even another aspect of the present disclosure provides a natural sauce comprising sucrose, liquid sugars, sugar alcohols, natural high-intensity sweeteners, and dairy ingredients.

The natural sauce is as described above.

Specifically, the sucrose and liquid sugars may be contained in an amount of 50 to 60 parts by weight based on 100 parts by weight of the total sauce; the sugar alcohols may be contained in an amount of 20 to 40 parts by weight based on 100 parts by weight of the total sauce; the natural high-intensity sweeteners may be contained in an amount of 0.01 to 0.1 parts by weight based on 100 parts by weight of the total sauce; and the dairy ingredients may be contained in an amount of 5 to 20 parts by weight based on 100 parts by weight of the total sauce, and the sauce may be caramelized, but is not limited thereto.

Specifically, the sauce has a color of higher lightness (L value) and yellow color value (b value) and a lower red color value (a value) measured at room temperature compared to a sauce that does not contain sugar alcohols and natural high sweeteners, but is not limited thereto.

### [Mode for Carrying Out the Invention]

Hereinafter, the present disclosure will be described in detail by way of Examples. However, these Examples are merely preferred Examples given for illustrative purposes, and thus, the scope of the present disclosure is not intended to be limited to or by these Examples. Meanwhile, technical features which are not described herein can be sufficiently understood and easily carried out by those skilled in the art in the technical field of the present disclosure or in a similar technical field.

### Preparation Example: Preparation of Natural (naturally derived additives-based) Sauce

Caramel sauces of Comparative Example and Examples 1 to 6 were prepared with the compositions shown in Table 1 below.

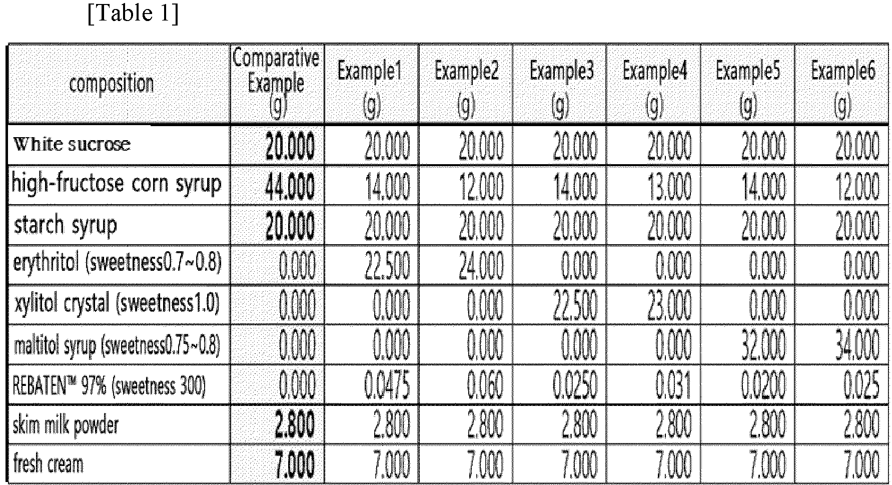

Specifically, in Examples, all raw materials (white sucrose, high-fructose corn syrup, starch syrup, sugar alcohol (erythritol, xylitol, or maltitol), REBATEN^{™}, skim milk powder, and fresh cream) were added to purified water and mixed, then heated to a temperature of 30°C to 50°C to be dissolved and caramelized.

Subsequently, the mixture was subjected to primary pasteurization using low-temperature long-time (LTLT) pasteurization at a temperature range of 60°C to 80°C for 30 to 60 minutes; and then the primarily pasteurized mixture was subjected to secondary pasteurization using high-temperature short-time (HTST) pasteurization at a temperature range of 90°C to 100°C for 30 seconds to 3 minutes.

Specifically, the primary pasteurization was performed at 60°C for 30 minutes, and then the secondary pasteurization was performed by raising the temperature to 80°C (takes about 25 minutes). The secondary pasteurization was performed at a temperature of 95°C±5°C for 30 seconds to 1 minute and 40 seconds using a tubular sterilizer, and when the temperature was decreased, it was performed for a total of less than 3 minutes, including the time to return and re-pass.

Subsequently, when the pasteurization was completed, caramel sauce was prepared by homogenizing at 3000 rpm using a homomixer (homogenizer), placed in the same container, stored at room temperature (about 25°C), and used in the experiment.

The caramel sauces prepared in Examples were prepared to contain 20 to 30% sugar alcohols and 50 to 60% sugars (white sucrose, high-fructose corn syrup, and starch syrup) excluding sugar alcohol, and were named Examples 1 to 6, respectively.

Meanwhile, in Comparative Example, the caramel sauce was prepared with the same composition as a commercially available general-purpose product, and was prepared in the same manner as in Examples, except that it was pasteurized for 30 minutes to 1 hour at a temperature range of 90°C to 100°C.

Specifically, the pasteurization was performed by raising the temperature of the solution at a temperature of 30°C to 50°C to 90°C (took about 40 minutes), and performed at 90°C for 30 minutes, and then homogenization was performed by raising the temperature to 95°C (took about 5 minutes).

The caramel sauce prepared in Comparative Example was prepared such that it did not contain sugar alcohols and contained more than 80% of sugars (white sucrose, high-fructose corn syrup, and starch syrup) excluding sugar alcohol, and was named Comparative Example.

### Experimental Example 1: Evaluation of Sweetness and Sugar Reduction Rate

The results of calculating the theoretical sweetness and sugar reduction rate (%) of the caramel sauces of Comparative Examples and Examples 1 to 6 are shown in Table 2 below.

**[Table 2]**

| Sugar reduction | Comparative | Example 1 | Example 2 | Example 3 | Example 4 | Example 5 | Example 6 |
|---|---|---|---|---|---|---|---|
| | based on 100% | **31.67** | **33.78** | **31.67** | **32.73** | **31.67** | **33.78** |
| Sweetness | 70.00 | 67.63 | 69.80 | 68.75 | 69.75 | 69.00 | 69.75 |
| sugar content | 71.04 | 48.54 | 47.04 | 48.54 | 47.79 | 48.54 | 47.04 |

As a result, as shown in Table 2, in the case of Comparative Example, it was confirmed that the theoretical sweetness was 70, the theoretical sugar content was 71.04, and Brix was 73, and in the case of Examples 1 to 6, it was confirmed that the theoretical sweetness was 67 to 70%, the theoretical sugar content was 47 to 49 and Brix was 73. Accordingly, it was confirmed that the caramel sauces of Examples 1 to 6 could theoretically reduce sugars by about 30% or more compared to existing products while maintaining similar sweetness.

Subsequently, in order to confirm whether it was possible to reduce sugars by about 30% or more compared to the actual existing product (Comparative Example), nutritional analysis of Example 2 was conducted as a representative.

Specifically, Example 2, which was designed to theoretically reduce sugar by 33.78% based on 100% sugar of Comparative Example, was commissioned by an authorized institution to carry out nutritional analysis.

**[Table 3]**

| [nutritional analysis result] | | |
|---|---|---|
| | Comparative Example | Example2 |
| sugar | 60.82 | 40.55 |
| reduction(%) | - | 33.32 |

As a result, as shown in Table 3 above, it was confirmed that sugars were reduced by 33.32%, similar to the theoretical value, and it was confirmed that sugars could be substantially reduced by 30% or more compared to the existing products while maintaining similar sweetness.

### Experimental Example 2: Discrimination Testing

A discrimination testing was conducted between the caramel sauces of Examples 2 and 6, which had excellent theoretical sweetness and sugar reduction rate (%) confirmed in Experimental Example 1, and a commercially-available caramel sauce (Comparative Example) to determine whether the caramel sauces of Examples 2 and 6 could actually exhibit sensory properties similar to the existing product while reducing sugar.

Specifically, a triangle testing was conducted, and the conditions were as follows.
- Investigated Products: commercially-available caramel sauce (Comparative Example) vs caramel sauces of Examples 1 to 6
- Investigated Sample: N=12, 3 sets of sensory per person (ABB/ABA/AAB)
- Method of Representation: Applied to caramel latte (caramel + steamed milk)
- Sensory Test Reading: a significance test table (p=1/3) was used, conducted for a total of 36 times, and it was determined that there was a significant difference when 20 or more correct answers were obtained.

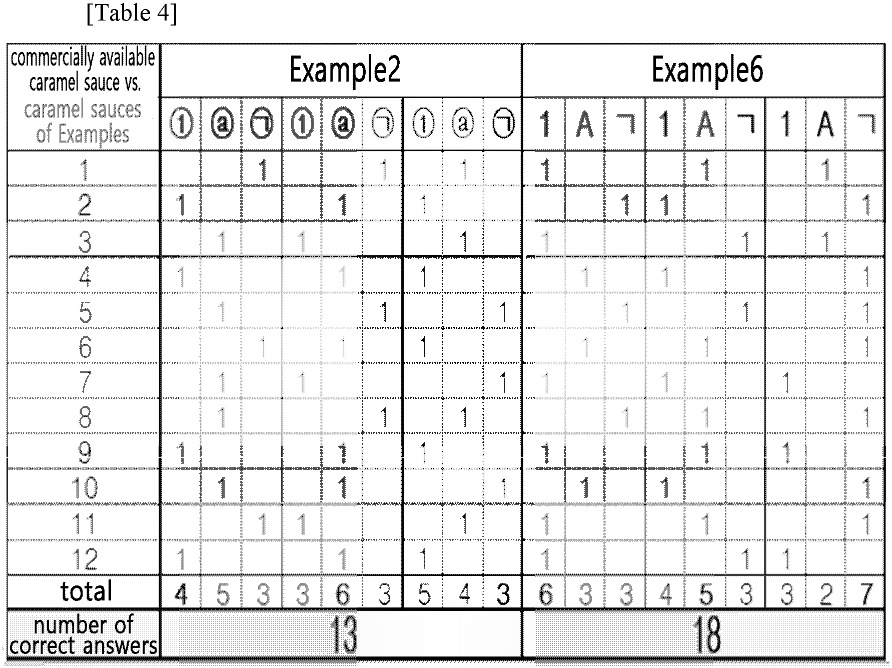

**[Table 5]**

| | | |
|---|---|---|
| **Commercially-available caramel sauce vs. Caramel sauces of Examples** | **Example 2** | **Example 6** |
| | **No significant difference** | **No significant difference** |

As a result, as shown in Tables 4 and 5, it was confirmed that Examples 2 and 6 containing erythritol and REBATEN^{™} (Example 2), and maltitol and REBATEN^{™} (Example 6) were not significantly different from the existing product.

### Experimental Example 3: Microbial Stability Evaluation

With respect to Examples 2 and 6, which were confirmed to exhibit sensory properties similar to the existing product in Experimental Example 2, it was attempted to determine whether the microbial stability similar to the existing product (Comparative Example) could be maintained.

Specifically, the samples of Comparative Example, Example 2, and Example 6 were diluted at 1/10 in sterilized water, and the number of general bacteria and fungi was measured according to the General Test Method of the Food Code. A 3M medium was used, and the average of 3 repeated values was used for each sample.

Sample before pasteurization: Sample just before pasteurization after mixing raw materials and measuring specifications.

Sample after pasteurization: Sample with all pasteurization/homogenization/filling completed.

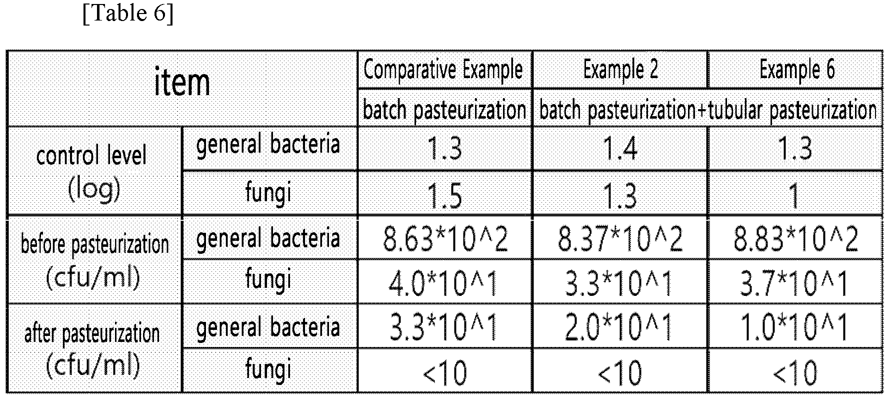

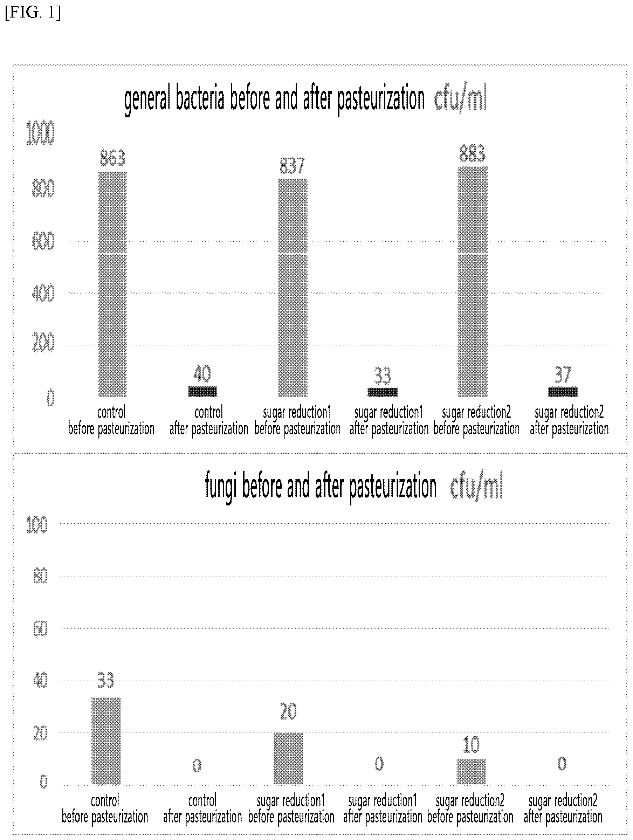

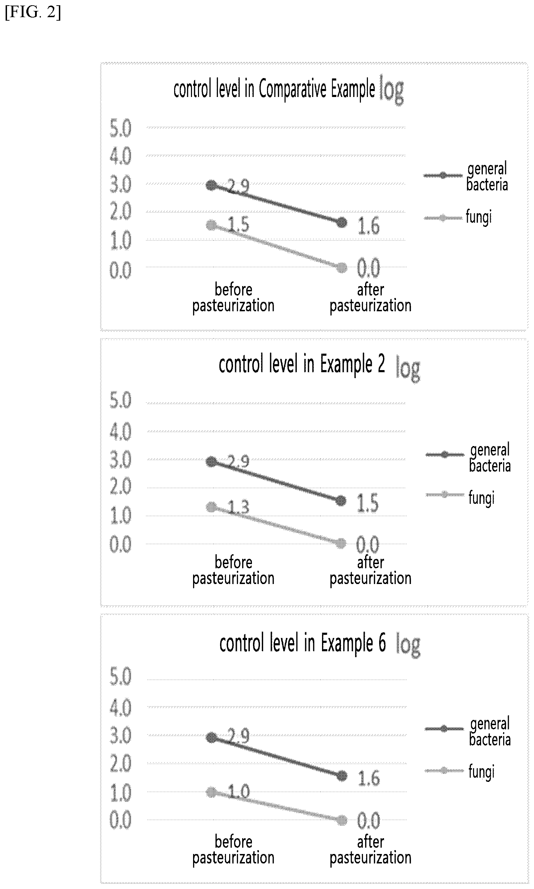

As a result, as shown in FIGS. 1, 2, and Table 6, it was confirmed that the microorganisms were controlled at a level of 1 to 1.5 log in Examples 2 and 6. Accordingly, it was confirmed that microbial stability was maintained at a similar level to the existing product (Comparative Example).

### Experimental Example 4: Measurement of Color Difference

It was attempted to determine whether browning occurred in Examples 2 and 6, which were confirmed to exhibit similar sensory and microbial stability to the existing products in Experimental Examples 2 and 3, and the existing product (Comparative Example).

Specifically, in order to confirm the color change in Comparative Example, Examples 2 and 6 immediately after high-temperature filling and after completion of cooling of the product temperature (room temperature, day 2), L (lightness) a (red), b (yellow), and △E (color change) values were measured using a colorimeter (Minolta CR300).

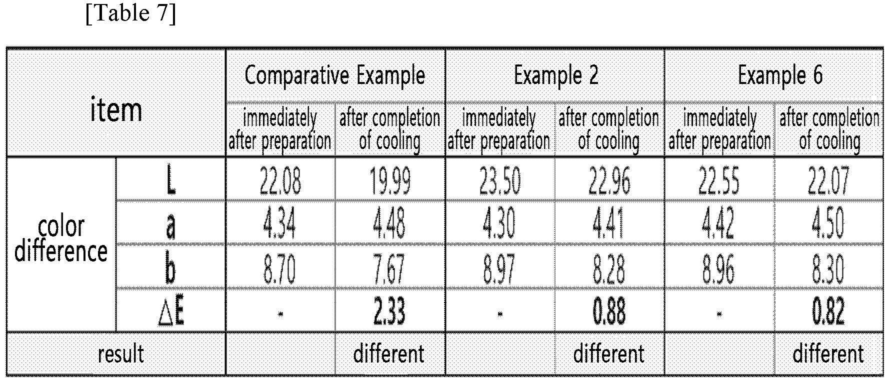

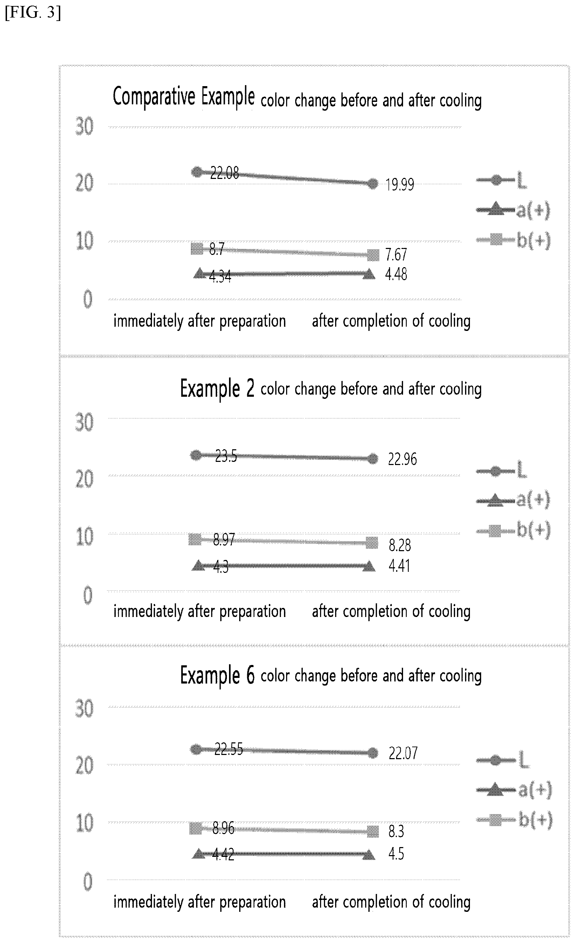

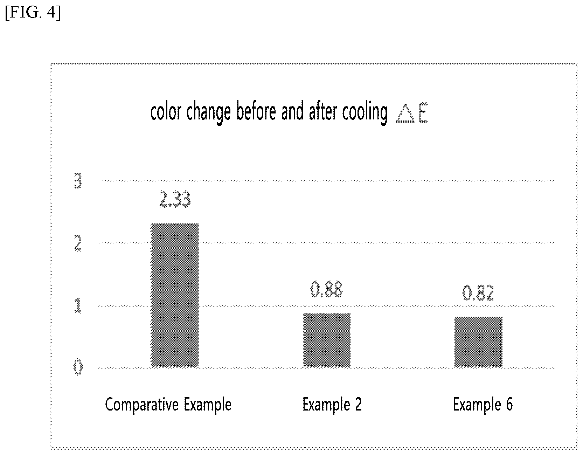

As a result, as shown in FIGS. 3, 4, and Table 7, in the case of Examples 2 and 6, it was confirmed that the color change (△E) of the sauce was 0.8 relative to the sauce before cooling. In general, if the color change (△E) is less than 1, the color difference cannot be recognized, which implied that the sauce prepared by the method of the present disclosure did not undergo browning even when cooled to room temperature during the distribution process.

In contrast, in the case of Comparative Example, since the color change (ΔE) was about 2, it was confirmed that browning occurred when cooled to room temperature during the distribution process.

### Experimental Example 5: Evaluation of Detailed Sensory Properties

The evaluation of the detailed sensory properties between Examples 2 and 6, which were confirmed to have similar sensory and microbial stability to the existing product in Experimental Examples 2 to 4, and have no occurrence of browning, and the existing product (general-purpose commercially-available caramel sauce) was conducted.

Specifically, the products of Examples 2 and 6 were compared with the existing product (general-purpose commercially-available caramel sauce) based on six items: color, sweetness, persistence of sweetness, caramel taste (flavor), mouthfeel, and body.

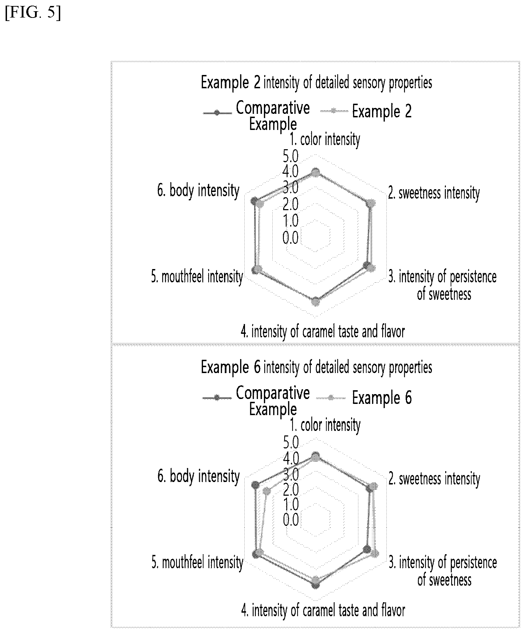

As a result, as shown in FIG. 5, it was confirmed that Examples 2 and 6 exhibited detailed sensory properties similar to those of Comparative Example, and in particular, the persistence of sweetness was confirmed to be superior compared to that of Comparative Example.

From the foregoing, a skilled person in the art to which the present disclosure pertains will be able to understand that the present disclosure may be embodied in other specific forms without modifying the technical concepts or essential characteristics of the present disclosure. In this regard, the exemplary embodiments disclosed herein are only for illustrative purposes and should not be construed as limiting the scope of the present disclosure. On the contrary, the present disclosure is intended to cover not only the exemplary embodiments but also various alternatives, modifications, equivalents, and other embodiments that may be included within the spirit and scope of the present disclosure as defined by the appended claims.

## Claims

1. A method for preparing a natural sauce, comprising:
mixing sucrose, liquid sugars, sugar alcohols, natural high-intensity sweeteners, and dairy ingredients in water;
dissolving and caramelizing the mixture by heating;
subjecting the caramelized mixture to primary pasteurization using low-temperature long-time (LTLT) pasteurization at a temperature range of 60°C to 80°C for 30 to 60 minutes; and
subjecting the primarily pasteurized mixture to secondary pasteurization using high-temperature short-time (HTST) pasteurization at a temperature range of 90°C to 100°C for 30 seconds to 3 minutes,
wherein the sucrose and liquid sugars are contained in an amount of 50 to 60 parts by weight based on 100 parts by weight of the total sauce;
the sugar alcohols are contained in an amount of 20 to 40 parts by weight based on 100 parts by weight of the total sauce;
the natural high-intensity sweeteners are contained in an amount of 0.01 to 0.1 parts by weight based on 100 parts by weight of the total sauce; and
the dairy ingredients are contained in an amount of 5 to 20 parts by weight based on 100 parts by weight of the total sauce.

2. The method of claim 1, wherein the sugar alcohol is one or more selected from the group consisting of erythritol, tagatose, xylose, arabinose, ribose, xylitol, lactitol, maltitol, and sorbitol.

3. The method of claim 1, wherein the natural high-intensity sweetener is one or more selected from the group consisting of steviol glycosides, monk fruit extracts, licorice extracts, and thaumatin.

4. The method of claim 1, further comprising homogenizing the pasteurized sauce.

5. The method of claim 1, further comprising cooling the pasteurized sauce to room temperature.

6. A natural sauce prepared by the method of any one of claims 1 to 5.

7. The sauce of claim 6, wherein browning is reduced relative to a sauce prepared by a method that does not comprise the primary and secondary pasteurization steps.

8. The sauce of claim 6, wherein, after cooling the sauce to room temperature, the color change (ΔE) of the sauce is 0.1 to 1 compared to the sauce before cooling.

9. A food composition comprising the natural sauce of claim 6.

10. A method for reducing browning of a natural sauce, comprising:
mixing sucrose, liquid sugars, sugar alcohols, natural high-intensity sweeteners, and dairy ingredients in water;
dissolving and caramelizing the mixture by heating;
subjecting the caramelized mixture to primary pasteurization using low-temperature long-time (LTLT) pasteurization at a temperature range of 60°C to 80°C for 30 to 60 minutes; and
subjecting the primarily pasteurized mixture to secondary pasteurization using high-temperature short-time (HTST) pasteurization at a temperature range of 90°C to 100°C for 30 seconds to 3 minutes,
wherein the sucrose and liquid sugars are contained in an amount of 50 to 60 parts by weight based on 100 parts by weight of the total sauce;
the sugar alcohols are contained in an amount of 20 to 40 parts by weight based on 100 parts by weight of the total sauce;
the natural high-intensity sweeteners are contained in an amount of 0.01 to 0.1 parts by weight based on 100 parts by weight of the total sauce; and
the dairy ingredients are contained in an amount of 5 to 20 parts by weight based on 100 parts by weight of the total sauce.

11. A natural sauce comprising sucrose, liquid sugars, sugar alcohols, natural high-intensity sweeteners, and dairy ingredients,
wherein the sucrose and liquid sugars are contained in an amount of 50 to 60 parts by weight based on 100 parts by weight of the total sauce;
the sugar alcohols are contained in an amount of 20 to 40 parts by weight based on 100 parts by weight of the total sauce;
the natural high-intensity sweeteners are contained in an amount of 0.01 to 0.1 parts by weight based on 100 parts by weight of the total sauce; and
the dairy ingredients are contained in an amount of 5 to 20 parts by weight based on 100 parts by weight of the total sauce, and
the sauce is caramelized.

12. The sauce of claim 11, wherein the sauce has a color of higher lightness (L value) and yellow value (b value) and a lower red value (a value) measured at room temperature compared to a sauce that does not contain sugar alcohols and natural high-intensity sweeteners.
